# EUROPEAN PATENT APPLICATION

(11) **EP 4 411 756 A1**
(43) Date of publication of application: **07.08.2024**
(21) Application number: 22875800.9
(22) Date of filing: 12.09.2022
(51) Int. Cl.: H01B 1/06, H01B 13/00, H01M 10/0562

(54) **METHOD FOR PRODUCING SULFIDE-BASED SOLID ELECTROLYTE POWDER**

(30) Priority: 30.09.2021 JP 2021161463
(71) Applicant: AGC INC., Chiyoda-ku, Tokyo 1008405 (JP)
(72) Inventor: KUNISA, Yasuhiro, Tokyo 100-8405 (JP); INOUE, Junichi, Tokyo 100-8405 (JP)
(74) Representative: Müller-Boré & Partner Patentanwälte PartG mbB
(86) International application number: PCT/JP2022/034125
(87) International publication number: WO 2023/053928

(57) **Abstract**

The present invention relates to a method for producing a sulfide-based solid electrolyte powder, the method comprising preparing a slurry containing a sulfide-based solid electrolyte material and a liquid medium, and performing a one-step pulverization of the sulfide-based solid electrolyte material in the slurry using a ball mill equipped with pulverization balls each having a diameter of 0.5 to 4 mm to produce a sulfide-based solid electrolyte powder having a particle diameter D99 of 15 µm or less.

## Description

### TECHNICAL FIELD

The present invention relates to a method for manufacturing a sulfide solid electrolyte powder.

### BACKGROUND ART

Lithium-ion secondary batteries are widely used in portable electronic devices such as mobile phones and laptop computers.

In the related art, a liquid electrolyte has been used in a lithium-ion secondary battery, but a lithium-ion all-solid-state battery (hereinafter, also referred to as a solid battery) in which a solid electrolyte is used as an electrolyte of the lithium-ion secondary battery has attracted attention from the viewpoint that safety can be improved and high-speed charge and discharge can be expected.

Since the solid electrolyte is inferior to a liquid electrolyte in permeability into a positive electrode or a negative electrode, battery performance is improved by reducing a particle diameter or eliminating coarse particles having a large particle diameter so as to form more interfaces with an active material.

In accordance with needs for weight reduction and the like of the solid battery, a solid electrolyte layer needs to be made thinner and sheet-like, and in order to prevent short circuits in the electrolyte layer, it is necessary to reduce the particle diameter of the solid electrolyte to a certain extent and eliminate coarse particles having a large particle diameter.

For example, Patent Literature 1 describes that a solid electrolyte powder was obtained by pulverizing a solid electrolyte fired product by a wet bead mill using zirconia beads having a diameter of 1 mm, and then further pulverizing using alumina beads having a diameter of 0.3 mm.

### CITATION LIST

### PATENT LITERATURE

Patent Literature 1: WO2020/105604A1

### SUMMARY OF INVENTION

### TECHNICAL PROBLEM

In the related art, as a method of pulverizing a solid electrolyte to obtain a solid electrolyte powder having a small particle diameter, two-stage pulverization has been performed in which a first stage pulverization is performed on a solid electrolyte material in a slurry by a ball mill using relatively large pulverization balls having a diameter of approximately 2 µm, and then a second stage pulverization is performed using relatively small pulverization balls having a diameter of approximately 0.3 µm.

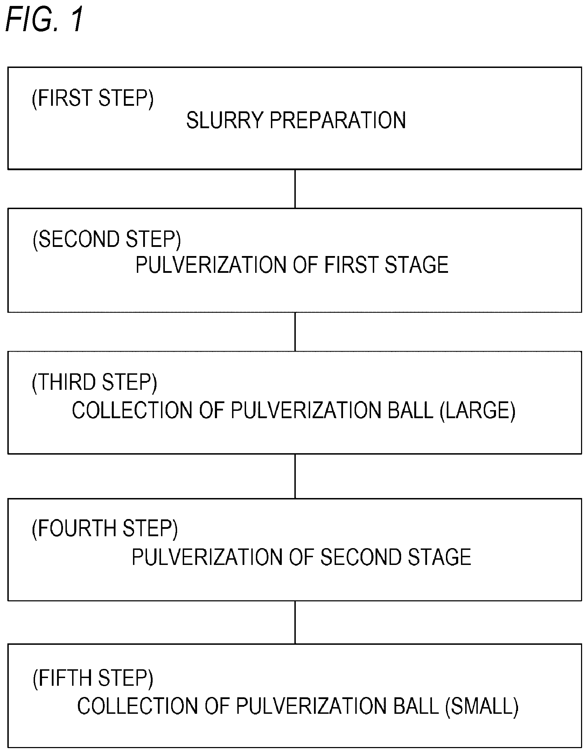

More specifically, as shown in FIG. 1, first, a slurry containing a solid electrolyte material and a liquid medium is prepared (first step). Pulverization balls having a relatively large diameter (pulverization balls (large), approximately 2 mm in diameter) are put into the prepared slurry, and the first stage pulverization is performed by a ball mill (second step). Thereafter, the pulverization balls (large) are collected from the slurry (third step), and then pulverization balls having a relatively small diameter (pulverization balls (small), approximately 0.3 mm in diameter) are put into the slurry, and the second stage pulverization is performed by the ball mill (fourth step). Thereafter, the pulverization balls (small) are collected (fifth step).

However, in the case where the solid electrolyte material in the slurry is subjected to the first stage pulverization using the pulverization balls having a relatively large diameter and then subjected to the second stage pulverization using the pulverization balls having a small diameter, since the pulverization balls in the second stage have a small diameter, there were problems in which it takes a long time to collect the pulverization balls from the slurry in the fifth step, and the pulverization balls get into gaps in a container used for pulverization so that cleaning of the container becomes difficult. Since the pulverization balls in the second stage have a small diameter and a large surface area, there were problems in which an amount of the solid electrolyte powder attached to the pulverization balls increases, and an amount of the solid electrolyte powder collected decreases.

The present inventors have diligently studied a method for manufacturing a solid electrolyte, particularly a sulfide solid electrolyte containing no coarse particles in a short time and at a high collection rate. As a result, the present inventors have found a method for manufacturing a sulfide solid electrolyte powder containing no coarse particles in a short time and at a high collection rate by performing pulverization in one stage by a ball mill using pulverization balls of a specific size, so as to complete the present invention.

### SOLUTION TO PROBLEM

A method for manufacturing a sulfide solid electrolyte powder according to an embodiment of the present invention includes: preparing a slurry containing a sulfide solid electrolyte material and a liquid medium; and pulverizing the sulfide solid electrolyte material in the slurry in one stage by a ball mill using a pulverization ball having a diameter of 0.5 mm to 4 mm to obtain a sulfide solid electrolyte powder having a particle diameter D99 of 15 µm or less.

In the method for manufacturing a sulfide solid electrolyte powder according to one aspect of the present invention, the sulfide solid electrolyte powder obtained after the pulverization may have a particle diameter D50 of 1.5 µm or less.

In the method for manufacturing a sulfide solid electrolyte powder according to one aspect of the present invention, the sulfide solid electrolyte powder obtained after the pulverization may have the particle diameter D50 of 0.4 µm to 0.9 µm.

In the method for manufacturing a sulfide solid electrolyte powder according to one aspect of the present invention, the slurry may have a solid content concentration of 5 mass% to 40 mass%.

In the method for manufacturing a sulfide solid electrolyte powder according to one aspect of the present invention, a time of the pulverization may be 120 minutes or less.

In the method for manufacturing a sulfide solid electrolyte powder according to one aspect of the present invention, the pulverization ball may be an alumina ball.

In the method for manufacturing a sulfide solid electrolyte powder according to one aspect of the present invention, the sulfide solid electrolyte material before the pulverization may have a particle diameter Dₘₐₓ of 200 µm or less.

In the method for manufacturing a sulfide solid electrolyte powder according to one aspect of the present invention, the pulverization ball may have a diameter of 1 mm to 4 mm.

In the method for manufacturing a sulfide solid electrolyte powder according to one aspect of the present invention, the sulfide solid electrolyte powder may include Li, P, and S.

In the method for manufacturing a sulfide solid electrolyte powder according to one aspect of the present invention, the sulfide solid electrolyte powder may have a crystal structure of an argyrodite type.

### ADVANTAGEOUS EFFECTS OF INVENTION

The method for manufacturing a sulfide solid electrolyte powder according to the embodiment of the present invention can manufacture a sulfide solid electrolyte powder containing no coarse particles in a short time and at a high collection rate.

### BRIEF DESCRIPTION OF DRAWINGS

[FIG. 1] FIG. 1 is a flowchart showing an example of manufacturing a sulfide solid electrolyte powder by two-stage pulverization in the related art.
[FIG. 2] FIG. 2 is a flowchart showing an example of manufacturing a sulfide solid electrolyte powder by one-stage pulverization of the present invention.

### DESCRIPTION OF EMBODIMENTS

Hereinafter, the present invention will be described in detail, but the present invention is not limited to the following embodiment and can be freely modified and implemented without departing from the gist of the present invention. The word "to" indicating a numerical range is used to include numerical values written before and after the word "to" as a lower limit value and an upper limit value.

A method for manufacturing a sulfide solid electrolyte powder according to the embodiment of the present invention includes: preparing a slurry containing a sulfide solid electrolyte material and a liquid medium; and pulverizing the sulfide solid electrolyte material in the slurry in one stage by a ball mill using a pulverization ball having a diameter of 0.5 mm to 4 mm to obtain a sulfide solid electrolyte powder having a particle diameter D99 of 15 µm or less.

As described above, in order to obtain a solid electrolyte powder having a small particle diameter by pulverizing a solid electrolyte material, two-stage pulverization as shown in FIG. 1 has been performed in the related art. However, since pulverization balls having a small diameter are used in the pulverization of the second stage, there were problems in which it takes a long time to collect the pulverization balls from the slurry after the pulverization, and the pulverization balls get into gaps of a container used for the pulverization so that cleaning of the container becomes difficult.

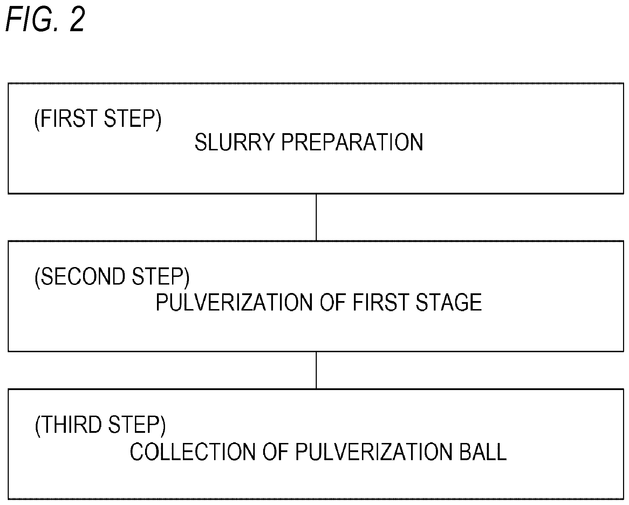

However, according to the present invention, the solid electrolyte is pulverized in one stage by a ball mill using pulverization balls having a diameter of 0.5 mm to 4 mm. Since pulverization balls having a relatively large diameter, which are the pulverization balls having a diameter of 0.5 mm to 4 mm, are used, the pulverization balls can be easily collected from the slurry, and a collection time of the pulverization balls can be shortened. Further, as shown in FIG. 2, since the number of steps for manufacturing the solid electrolyte powder is smaller than that of the method in the related art shown in FIG. 1, the time required for manufacturing the sulfide solid electrolyte powder can be shortened. In addition, since a total amount of energy given to the solid electrolyte by collision with the pulverization balls or an inner wall of the container is reduced, the lithium ion conductivity is improved.

In the present invention, since the pulverization balls having a relatively large diameter of 0.5 mm to 4 mm are used, it is possible to prevent the pulverization balls from getting into the gaps of the container used for pulverization, and the container can be easily cleaned. Further, since a surface area of the pulverization balls is small, an amount of the solid electrolyte powder attached to the pulverization balls is small, and an amount of the solid electrolyte powder collected can be improved.

Hereinafter, the method for manufacturing a sulfide solid electrolyte powder of the present embodiment will be described in detail.

First, a slurry containing a sulfide solid electrolyte material and a liquid medium is prepared.

In the present embodiment, the sulfide solid electrolyte material is used as a target of wet pulverization described later, and refers to a solid sulfide electrolyte capable of moving ions therein. The sulfide solid electrolyte in the present embodiment is not particularly limited as long as it is sulfide-based, and one containing sulfur (S) and having lithium ion conductivity can be preferably used.

The sulfide solid electrolyte according to the present embodiment may include at least one of a crystal phase and an amorphous phase.

The crystal phase or the amorphous phase is not particularly limited as long as it includes Li, P, and S, and a known one can be applied. The sulfide solid electrolyte may include at least one of the crystal phase and the amorphous phase, or may include both.

Among these cases, at least one of the crystal phase and the amorphous phase preferably includes Ha in addition to Li, P, and S from the viewpoint of lithium ion conductivity. Ha is at least one element selected from the group consisting of F, Cl, Br, and I.

Examples of a crystal structure of the crystal phase include an LGPS type such as Li₁₀GeP₂S₁₂ and Li_{9.54}Si_{1.74}P_{1.44}S_{11.7}Cl_{0.3}, and an argyrodite type such as Li_{5.6}PS_{4.4}Cl_{0.8}Br_{0.8}, Li_{5.4}PS_{4.4}Cl_{1.6}, Li₆PS₅Cl, and Li₆PS₅Cl_{0.5}Br_{0.5}. Examples of the amorphous phase include LPS crystallized glass such as Li₇P₃S₁₁, and crystallized glass having a composition containing Ha in addition to Li, P, and S. A phase structure of the crystal phase or the amorphous phase may be one type or two or more types.

When the crystal phase is included, the crystal structure thereof preferably includes an argyrodite type from the viewpoint of symmetry of the crystal structure. A crystal having high symmetry is preferable since paths for lithium ion conduction spread in three dimensions to form the powder. From the viewpoint of obtaining the powder by pulverization, the crystal having the high symmetry is also preferable since the lithium ion conductivity is easily maintained.

In order to obtain an argyrodite crystal structure, the crystal phase includes Ha in addition to Li, P, and S. Ha more preferably includes at least one of Cl and Br, still more preferably includes Cl, and even more preferably includes a single substance of Cl or a mixture of Cl and Br.

The argyrodite crystal can be defined as including Li, P, S, and Ha, and having peaks at positions where 2θ = 15.7 ± 0.5° and 30.2 ± 0.5° in an X-ray powder diffraction (XRD) pattern. In addition to the above peaks, the XRD pattern preferably has a peak at positions where 2θ = 18.0 ± 0.5°, and more preferably has a peak at positions where 2θ = 25.7 ± 0.5°.

When expressed as LiₐPS_{b}Ha_{c}, the argyrodite crystal preferably satisfies relations of 5 < a < 7, 4 < b < 6 and 0 < c < 2 so that the crystal tends to become an argyrodite crystal. Such element ratios more preferably satisfy relations of 5.1 < a < 6.3, 4 < b < 5.3, and 0.7 < c < 1.9, and still more preferably satisfy relations of 5.2 < a < 6.2, 4.1 < b < 5.2, and 0.8 < c < 1.8.

That is, regarding a, 5 < a < 7 is preferable, 5.1 < a < 6.3 is more preferable, and 5.2 < a < 6.2 is still more preferable.

Regarding b, 4 < b < 6 is preferable, 4 < b < 5.3 is more preferable, and 4.1 < b < 5.2 is still more preferable.

Regarding c, 0 < c < 2 is preferable, 0.7 < c < 1.9 is more preferable, and 0.8 < c < 1.8 is still more preferable.

Note that in the present specification, the "element ratio" means a ratio of a content (at%) of an element.

In the case of the argyrodite crystal, a preferable crystal structure is, for example, a cubic crystal such as F-43m, and a hexagonal crystal, a tetragonal crystal, an orthorhombic crystal, a monoclinic crystal, or the like which have reduced symmetry or a triclinic crystal having further reduced symmetry may exist.

In the case where Ha constituting the argyrodite crystal includes Cl and Br, a ratio represented by (x/y) is preferably 0.1 or more, more preferably 0.3 or more, and still more preferably 0.5 or more, in which x (at%) is a content of Cl in the argyrodite crystal and y (at%) is a content of Br. The ratio represented by (x/y) is preferably 10 or less, more preferably 3 or less, and still more preferably 1.6 or less.

When the ratio represented by (x/y) satisfies the above range, an interaction between lithium ions and halide ions is weakened, and the lithium ion conductivity of the sulfide solid electrolyte is likely to be satisfactory. This is considered to be caused by an influence of a mixed anion effect, which weakens an interaction between cations and anions by mixing bromide ions having an ionic radius larger than that of chloride ions. When the ratio represented by (x/y) satisfies the above range, cycle characteristics of a lithium-ion secondary battery are likely to be improved.

In the case where Ha includes Cl and Br, when a ratio of the contents (at%) of elements constituting the argyrodite crystal is expressed as Liₐ-P-S_{b}-Cl_{c1}-Br_{c2}, c1 is preferably 0.1 or more, more preferably 0.3 or more, and still more preferably 0.5 or more. Preferably, c1 is 1.5 or less, more preferably 1.4 or less, and still more preferably 1.3 or less.

Preferably, c2 is 0.1 or more, more preferably 0.3 or more, and still more preferably 0.5 or more. Preferably, c2 is 1.9 or less, more preferably 1.6 or less, and still more preferably 1.4 or less.

When c1 and c2 each satisfy the above ranges, a stable argyrodite crystal can be obtained while an abundance proportion of halide ions in the crystal is optimized and the interaction between the anions and the lithium ions in the crystal is reduced. Accordingly, the lithium ion conductivity of the solid electrolyte is likely to be satisfactory. When c1 and c2 each satisfy the above ranges, the cycle characteristics of the lithium-ion secondary battery are likely to be improved.

Here, a, b, and (c1 + c2) preferably satisfy the same relations as the above-described a, b, and c.

A crystallite size of the crystal constituting the crystal phase is preferably small from the viewpoint of obtaining good lithium ion conductivity when forming a battery. Specifically, the crystallite size is preferably 1,000 nm or less, more preferably 500 nm or less, and still more preferably 250 nm or less. A lower limit of the crystallite size is not particularly limited, and the crystallite size is generally 5 nm or more.

The crystallite size can be calculated by using a half-width of a peak in the XRD pattern and the Scherrer equation.

In the crystal phase in the sulfide solid electrolyte according to the present embodiment, a counter anion is fixed in the crystal structure thereof. The amorphous phase in the sulfide solid electrolyte can also form an anion structure in the structure by adjusting the composition.

The counter anion or anion structure differs depending on a structure such as the crystal structure, and examples thereof include PS₄³⁻, P₂S₆⁴⁻, P₂S₇⁴⁻, O²⁻, S²⁻, Se²⁻, F , Cl , Br⁻ and I⁻.

Among these, it is preferable to include PS₄³⁻ having a tetrahedral structure from the viewpoint of improvement in heat-resistance of the crystal and a thermodynamically stable effect.

Note that when the argyrodite crystal is Li₆PS₅Cl, a counter anion constituting LiePSsCl is a PS₄³⁻ tetrahedron. In addition, examples of a crystal phase in which the counter anion is the PS₄³⁻ tetrahedron include an LGPS crystal and LPS crystallized glass.

The structure of the counter anion included in the crystal phase can be determined by structural analysis performed from an XRD pattern. The anion structure included in the amorphous phase can be determined by the Raman spectroscopy or the nuclear magnetic resonance (NMR).

The sulfide solid electrolyte according to the present embodiment may include, in addition to the crystal phase or the amorphous phase including Li, P, and S, an anion such as an oxide anion substituted at a site having the counter anion or anion structure as described above, Li₃PS₄, Li₄P₂S₆, Li₂S, LiHa (Ha is at least one halogen element selected from F, Cl, Br, and I), and the like.

A total content of elements constituting the crystal phase and the amorphous phase including Li, P, and S in the sulfide solid electrolyte is preferably 60 mass% or more, more preferably 80 mass% or more, and still more preferably 90 mass% or more, from the viewpoint of achieving the high ion conductivity. An upper limit of the total content is not particularly limited, and may be 100 mass%. In the case where two or more kinds of crystal phases and amorphous phases are present, a total content thereof is preferably in the above range.

The total content of the elements constituting the crystal phase and the amorphous phase is obtained by a composition analysis using ICP emission spectrometry, atomic absorption, ion chromatography, or the like. A proportion of the crystal phase can be calculated by adding an internal standard substance, measuring with XRD or neutral-beam scattering, and then comparing peak intensity with that of the internal standard substance.

A particle diameter Dₘₐₓ of the sulfide solid electrolyte material before pulverization by the ball mill is preferably 200 µm or less. By setting the particle diameter Dₘₐₓ of the sulfide solid electrolyte material within the above range, the sulfide solid electrolyte powder without coarse particles can be efficiently obtained by one-stage pulverization described later.

Here, the particle diameter Dₘₐₓ means the maximum particle diameter in the volume-based cumulative particle diameter distribution, and can be measured using, for example, a laser diffraction type particle size distribution measuring device such as Micrtrao MT 3300 EX II and an ultra small volume circulator Microtrac USVR, manufactured by MicrotracBEL.

The particle diameter Dₘₐₓ of the sulfide solid electrolyte material is more preferably 150 µm or less, and still more preferably 100 µm or less. In order to improve the lithium ion conductivity, Dₘₐₓ is preferably 5 µm or more, and more preferably 10 µm or more.

In order to set the particle diameter Dₘₐₓ of the sulfide solid electrolyte material within the above range, for example, there is a method in which the sulfide solid electrolyte material is coarsely pulverized using a mortar, a cutter mill, a planetary ball mill, or the like, and then sieved with a sieve having an appropriate opening (for example, 150 µm) in accordance with an embodiment to be performed.

A content of the sulfide solid electrolyte material in the slurry is preferably 5 mass% to 40 mass% from the viewpoint of pulverization efficiency and ease of handling of the slurry. The content of the sulfide solid electrolyte material in the slurry is more preferably 10 mass% or more, and still more preferably 20 mass% or more. The content of the sulfide solid electrolyte material in the slurry is more preferably 30 mass% or less, and still more preferably 25 mass% or less.

As the liquid medium in the present embodiment, a solvent generally used for the sulfide solid electrolyte material can be used, and the type thereof is not particularly limited, and examples thereof include hydrocarbon compounds, ether compounds, and mixed solvents thereof. Among these examples, a mixed solvent of a hydrocarbon compound and an ether compound is preferable from the viewpoint of good dispersibility of the slurry.

Examples of the hydrocarbon compound include alkanes such as heptane, hexane, and octane, and aromatic hydrocarbons such as benzene, toluene, and xylene.

The ether compound may be an ether compound having 2 to 20 carbon atoms.

The content ratio (mass ratio) of the hydrocarbon compound and the ether compound in the mixed solvent is not particularly limited, and the hydrocarbon compound is preferably included in the mixed solvent in an amount of 20 mass% to 80 mass%, and the ether compound is preferably included in the mixed solvent in an amount of 20 mass% to 80 mass%.

According to the manufacturing method of the present embodiment, the sulfide solid electrolyte powder which does not contain coarse particles and has good lithium ion conductivity can be obtained in a short time and at a high collection rate without containing a dispersant in the slurry, but the slurry may contain a dispersant or the like.

However, an organic substance such as a surfactant used as a dispersant may become an impurity, and when the organic substance remains in a solid electrolyte layer, the organic substance may be decomposed or carbonized during charge and discharge of the lithium-ion secondary battery, which may adversely affect performance of the solid electrolyte. Therefore, it is preferable that the slurry does not contain a dispersant or contains a minimum necessary amount of a dispersant.

A solid content concentration of the slurry is preferably 5 mass% to 40 mass% from the viewpoint of pulverization efficiency and ease of handling of the slurry. The solid content concentration of the slurry is more preferably 10 mass% or more, and still more preferably 20 mass% or more. The solid content concentration of the slurry is more preferably 30 mass% or less, and still more preferably 25 mass% or less.

Subsequently, in the slurry prepared above, the sulfide solid electrolyte material is pulverized in one stage by a ball mill using pulverization balls having a diameter of 0.5 mm to 4 mm. The ball mill is preferably a planetary ball mill or a bead mill, and particularly preferably a planetary ball mill. The planetary ball mill is preferable also because it has good sealability, prevents the material to be pulverized from being exposed to air, and can reduce a dew point.

By pulverizing the sulfide solid electrolyte material using the slurry, granulation of the sulfide solid electrolyte material during pulverization and adhesion of the sulfide solid electrolyte powder to a wall of a container and the like can be prevented.

In the present embodiment, it is important to perform pulverization by the ball mill using the pulverization balls having a diameter of 0.5 mm to 4 mm. Therefore, a sulfide solid electrolyte powder having a particle diameter D99 of 15 µm or less and containing no coarse particles can be obtained by one-stage pulverization.

Here, the "one-stage pulverization" means that, in the pulverization by the ball mill, the pulverization is performed using pulverization balls having a diameter within a range of 0.5 mm to 4 mm, preferably 1 mm to 3 mm, and more preferably 1 mm to 2 mm. That is, the "one-stage pulverization" does not necessarily mean that only one time of pulverization is performed, and includes a case where pulverization is performed a plurality of times as long as pulverization balls having a diameter within the range are used.

For example, even in the case where pulverization of the first time by the ball mill is performed using pulverization balls having a diameter of 3 mm, and then the pulverization balls are collected, followed by performing pulverization of the second time by the ball mill using pulverization balls having a diameter of 2 mm, since the diameters of the pulverization balls used in the first and second times are included in the above range, the total two times of pulverization are collectively considered as "one-stage pulverization".

However, in the case where pulverization of the first time by the ball mill is performed using pulverization balls having a diameter of 3 mm, and then the pulverization balls are collected, followed by performing pulverization of the second time by the ball mill using pulverization balls having a diameter of 0.3 mm, since the diameter of the pulverization balls used in the second time is not included in the above range, the total two times of pulverization cannot be said as "one-stage pulverization".

Note that even in the case of using the pulverization balls having the diameter in the range, when pulverization is performed a plurality of times, collection steps of the pulverization balls increase, and a total pulverization treatment time may increase. Further, since there is a concern that workability may deteriorate due to an increase in the solid content concentration caused by volatilization of the solvent during collection of the pulverization balls, the number of times of pulverization is preferably one.

In the pulverization, pulverization balls may be added to the slurry prepared above, and atmosphere in a container of the ball mill may be set to inert gas atmosphere, and the treatment may be performed at a predetermined rotation speed for a predetermined time.

The diameter of the pulverization balls is 0.5 mm to 4 mm. When the diameter of the pulverization balls is 0.5 mm or more, a sulfide solid electrolyte powder having good lithium ion conductivity can be obtained. When the diameter of the pulverization balls is 4 mm or less, coarse particles (for example, more than 15 µm) tend to be difficult to form.

The diameter of the pulverization balls is preferably 0.8 mm or more, and particularly preferably 1 mm or more. The diameter of the pulverization balls is more preferably 3 mm or less, and still more preferably 2 mm or less.

The diameter of the pulverization balls is preferably 5 to 20 times, more preferably 5 to 10 times the particle diameter Dₘₐₓ of the sulfide solid electrolyte material before pulverization. By using pulverization balls having a diameter in this range, it is possible to obtain a sulfide solid electrolyte powder having good lithium ion conductivity and containing no coarse particles, to shorten a manufacturing time, and to improve the collection rate of the solid electrolyte powder.

A type of the pulverization balls is not particularly limited, and examples thereof include alumina balls, zirconia balls, silicon nitride, and agate balls (silica). Among them, alumina balls are preferable from the viewpoint of obtaining a sulfide solid electrolyte powder having good lithium ion conductivity and containing no coarse particles.

A rotation speed of a plate of the ball mill is, for example, preferably 100 rpm to 250 rpm, and more preferably 150 rpm to 200 rpm. When the rotation speed of the plate is 100 rpm or more, the sulfide solid electrolyte material can be pulverized to a desired particle diameter. When the rotation speed of the plate is 250 rpm or less, excessive pulverization of the sulfide solid electrolyte material can be prevented, and aggregation of particles in the sulfide solid electrolyte powder can be prevented.

The pulverization time by the ball mill is preferably 120 minutes or less. When the time is 120 minutes or less, a total amount of energy given to the sulfide solid electrolyte material by collision with the pulverization balls or an inner wall of the container becomes smaller, and thus the lithium ion conductivity is improved. The sulfide solid electrolyte powder can be obtained in a short time.

The pulverization time by the ball mill is more preferably 90 minutes or less, and still more preferably 60 minutes or less. The pulverization time by the ball mill is preferably 20 minutes or more, more preferably 30 minutes or more, and still more preferably 45 minutes or more from the viewpoint of eliminating coarse particles of more than 15 µm in addition to pulverizing to D50 of approximately 1 µm.

In the present embodiment, a sulfide solid electrolyte powder having a particle diameter D99 of 15 µm or less is obtained by performing pulverization in one stage by a ball mill using pulverization balls having a diameter of 0.5 mm to 4 mm. Here, the particle diameter D99 means 99% diameter in the volume-based cumulative particle diameter distribution, and can be measured using, for example, a laser diffraction type particle size distribution measuring device such as Micrtrao MT 3300 EX II manufactured by MicrotracBeL, and an ultra small volume circulator Microtrac USVR. Particle diameters D50, D10, and D90 described later can also be measured by the same method.

The particle diameter D99 is preferably 15 µm or less, more preferably 10 µm or less, and still more preferably 7 µm or less.

When the particle diameter D99 is 15 µm or less, it means that there are no coarse particles having a large particle diameter, and therefore, more interfaces with an active material are formed, and battery performance is improved. Continuity in the sulfide solid electrolyte powder is easily ensured, and resistance is easily reduced. The electrolyte layer becomes dense, leading to low resistance. Further, a short circuit is easily prevented. Note that in the present invention, the coarse particles mean particles having a particle diameter of more than 15 µm.

The particle diameter D99 is preferably 1.5 µm or more, and more preferably 2 µm or more. When the particle diameter D99 is 1.5 µm or more, the particle diameter does not become too small, so that crystallinity of the sulfide solid electrolyte powder is hardly impaired, and good lithium ion conductivity is obtained.

In the sulfide solid electrolyte powder, the 50% diameter (particle diameter D50) in the volume-based cumulative particle diameter distribution is preferably 1.5 µm or less, more preferably 0.9 µm or less, and still more preferably 0.7 µm or less.

Since the particle diameter D50 is 1.5 µm or less, which is a small particle diameter, more interfaces with the active material are formed, and the battery performance is improved. Continuity in the sulfide solid electrolyte powder is easily ensured, and resistance is easily reduced. The electrolyte layer becomes dense, leading to low resistance. Further, a short circuit is easily prevented.

In the sulfide solid electrolyte powder, the particle diameter D50 is preferably 0.4 µm or more. When the particle diameter D50 is 0.4 µm or more, the particle diameter does not become too small, so that crystallinity of the sulfide solid electrolyte powder is hardly impaired, and good lithium ion conductivity is obtained.

The particle diameter D50 is more preferably 0.45 µm or more, and still more preferably 0.5 µm or more.

The sulfide solid electrolyte powder preferably has a 10% diameter (particle diameter D10) in the volume-based cumulative particle diameter distribution of 0.15 µm to 0.5 µm, and more preferably 0.2 µm to 0.4 µm.

Since the particle diameter D10 is 0.5 µm or less, which is a small particle diameter, more interfaces with the active material are formed, and the battery performance is improved. Continuity in the sulfide solid electrolyte powder is easily ensured, and resistance is easily reduced. The electrolyte layer becomes dense, leading to low resistance. Further, a short circuit is easily prevented.

When the particle diameter D10 is 0.15 µm or more, the particle diameter does not become too small, so that crystallinity of the sulfide solid electrolyte powder is hardly impaired, and good lithium ion conductivity is obtained.

The particle diameter D10 is more preferably 0.4 µm or less, still more preferably 0.3 µm or less, and particularly preferably 0.25 µm or less. The particle diameter D10 is more preferably 0.2 µm or more.

The sulfide solid electrolyte powder preferably has a 90% diameter (particle diameter D90) of 1.0 µm to 3.0 µm in the volume-based cumulative particle diameter distribution.

Since the particle diameter D90 is 3.0 µm or less, which is a small particle diameter, more interfaces with the active material are formed, and the battery performance is improved. Continuity in the sulfide solid electrolyte powder is easily ensured, and resistance is easily reduced. The electrolyte layer becomes dense, leading to low resistance. Further, a short circuit is easily prevented.

When the particle diameter D90 is 1.0 µm or more, the particle diameter does not become too small, so that crystallinity of the sulfide solid electrolyte powder is hardly impaired, and good lithium ion conductivity is obtained.

The particle diameter D90 is more preferably 2.5 µm or less, still more preferably 2.0 µm or less, particularly preferably 1.7 µm or less. The particle diameter D90 is more preferably 1.3 µm or more, still more preferably 1.4 µm or more, and particularly preferably 1.5 µm or more.

In the sulfide solid electrolyte powder, the lithium ion conductivity is preferably 4.0 mS/cm or more, more preferably 4.5 mS/cm or more, and still more preferably 5.0 mS/cm or more. The lithium ion conductivity is measured by a method described in Examples below.

In the method for manufacturing the sulfide solid electrolyte powder of the present embodiment, the collection rate of the sulfide solid electrolyte powder from the slurry is preferably 70% or more, more preferably 80% or more, and still more preferably 85% or more. Note that the collection rate can be measured by a method described in Examples.

### <Solid Electrolyte Layer>

The sulfide solid electrolyte powder obtained by the manufacturing method disclosed above may be used for a solid electrolyte layer used in a lithium-ion all-solid-state battery. The solid electrolyte layer may contain a binder as necessary.

A content of the sulfide solid electrolyte powder in the solid electrolyte layer is not particularly limited, and may be appropriately determined according to performance of a target battery. For example, when the entire solid electrolyte layer is 100 mass%, the content of the sulfide solid electrolyte powder is preferably 80 mass% or more, and more preferably 90 mass% or more.

Examples of the binder that can be contained in the solid electrolyte layer include butadiene rubber (BR), acrylate butadiene rubber (ABR), styrene butadiene rubber (SBR), polyvinylidene fluoride (PVdF), and polytetrafluoroethylene (PTFE). The content of the binder in the solid electrolyte layer may be the same as that in the related art.

A thickness of the solid electrolyte layer is not particularly limited, and may be appropriately determined according to the performance of the target battery. For example, the thickness is preferably 10 µm or more, and more preferably 15 µm or more. When the thickness of the solid electrolyte layer is 10 µm or more, it is possible to obtain a solid electrolyte layer having high mechanical strength, high resistance to stress such as vibration and bending, and high reliability.

The thickness of the solid electrolyte layer is preferably 50 µm or less, and more preferably 20 µm or less. By reducing the thickness of the solid electrolyte layer to 50 µm or less, ion conductivity between positive and negative electrodes can be increased, and an energy density of the battery can also be increased.

A method for forming the solid electrolyte layer is not particularly limited. For example, the solid electrolyte layer can be formed by dispersing or dissolving components constituting the solid electrolyte layer in a liquid medium to form a slurry, applying the slurry in the form of a layer (sheet), drying the slurry, and pressing in a free manner. If necessary, the binder may be removed by heating. A thickness of the solid electrolyte layer can be easily adjusted by adjusting a coating amount of the slurry or the like.

Note that instead of the wet molding as described above, the solid electrolyte layer may be formed by pressing the solid electrolyte powder or the like by a dry method on a surface of a target (a positive electrode, a negative electrode, or the like) on which the solid electrolyte layer is to be formed. Alternatively, a solid electrolyte layer may be formed on another base material, and be transferred to a surface of the target on which the solid electrolyte layer is to be formed. From the viewpoint that a strong solid electrolyte layer can be industrially stably formed on a surface of a target on which the solid electrolyte layer is to be formed, the solid electrolyte layer is preferably formed on the surface of the target by wet molding using a liquid medium.

### <Lithium-ion All-solid-state Battery>

A lithium-ion all-solid-state battery according to the present embodiment includes the solid electrolyte layer, a positive electrode, and a negative electrode. As the positive electrode and the negative electrode, known ones in the related art may be used, or one containing the sulfide solid electrolyte powder obtained by the manufacturing method disclosed above may be used.

Specific examples are shown below, but the present invention is not limited thereto.

### (Positive Electrode)

The positive electrode includes at least a positive electrode current collector and a positive electrode active material. The sulfide solid electrolyte powder obtained by the manufacturing method disclosed above may be included.

The positive electrode current collector may be a conductive plate material, and for example, a thin metal plate (metal foil) of aluminum, an alloy thereof,or stainless steel can be used. These are preferable because they are excellent in electrolytic solution resistance and oxidation resistance.

The positive electrode active material is not particularly limited as long as occlusion and release of lithium ions, desorption and insertion (intercalation) of lithium ions, or doping and de-doping of counter anions (for example, PF₆⁻) of the lithium ions can proceed reversibly, and known positive electrode active materials can be used. Examples of the positive electrode active material include lithium cobalt oxide (LiCoO₂), lithium nickel oxide (LiNiO₂), lithium manganate (LiMnO₂), nickel manganese lithium, a composite metal oxide represented by Li(NiₓCo_{y}Mn_{z}Mₐ)O₂ (x + y + z + a = 1, 0 ≤ x ≤ 1, 0 ≤ y ≤ 1, 0 ≤ z ≤ 1, 0 ≤ a ≤ 1, M is at least one selected from Al, Mg, Nb, Ti, Cu, Zn, Cr), and a polyanionic olivine type positive electrode represented by LiₐM_{b}(PO₄)_{c} (1 ≤ a ≤ 4, 1 ≤ b ≤ 2, 1 ≤ c ≤ 3, and M is at least one selected from Fe, V, Co, Mn, Ni, and VO).

The positive electrode may include a binder that binds the positive electrode active materials to each other and binds the positive electrode active material to the positive electrode current collector. A known binder in the related art can be used.

The positive electrode may include a known conductive aid for a positive electrode, and examples thereof include carbon-based materials such as graphite and carbon black, metals such as copper, nickel, stainless steel, and iron, and conductive oxides such as indium tin oxide (ITO).

### (Negative Electrode)

The negative electrode includes at least a negative electrode current collector and a negative electrode active material. The sulfide solid electrolyte powder obtained by the manufacturing method disclosed above may be included.

The negative electrode current collector may be a conductive plate material, and for example, a thin metal plate (metal foil) such as copper or aluminum can be used. These are preferable because they are excellent in electrolytic solution resistance and oxidation resistance.

The negative electrode active material is not particularly limited, and a material capable of inserting and desorbing lithium ions may be used. For example, lithium metal, a carbon-based material, silicon, a silicon alloy, or tin can be used.

The negative electrode active material is not particularly limited as long as occlusion and release of lithium ions, desorption and insertion (intercalation) of lithium ions, or doping and de-doping of counter anions (for example, PF₆⁻) of the lithium ions can proceed reversibly, and known negative electrode active materials can be used. Examples of the negative electrode active material include carbon-based materials such as graphite, hard carbon, and soft carbon, metals capable of forming an alloy with lithium such as aluminum, silicon, and tin, amorphous oxides such as silicon oxide and tin oxide, and lithium titanate (Li₄Ti₅O₁₂).

In addition, the negative electrode may include a binder that binds the negative electrode active materials to each other and binds the negative electrode active material to the negative electrode current collector. A known binder in the related art can be used.

The negative electrode may include a known conductive aid for a negative electrode, and the same conductive aid for the positive electrode as described above can be used.

Those constituting the lithium-ion all-solid-state battery such as the solid electrolyte layer, the positive electrode, and the negative electrode are stored in a battery outer casing. As a material of the battery outer casing, known materials in the related art can be used, and specific examples thereof include nickel-plated iron, stainless steel, aluminum, alloys thereof, nickel, titanium, resin materials, and film materials.

Examples of the shape of the lithium-ion all-solid-state battery include a coin shape, a sheet shape (film shape), a folded shape, a wound cylindrical shape with a bottom, and a button shape, and can be appropriately selected according to an application thereof.

The lithium-ion all-solid-state battery according to the present embodiment can achieve good lithium ion conductivity.

### EXAMPLES

Hereinafter, the present invention will be specifically described with reference to Examples, but the present invention is not limited thereto.

### (Test Example 1)

Sulfide solid electrolyte powders of Examples 1 to 9 were produced by the following method. Examples 1 to 4 are working examples, and Examples 5 to 9 are comparative examples.

### (Example 1)

First, a dry powder of coarse particles obtained by pulverizing sulfide solid electrolyte pellets (argyrodite crystal structure, composition: Li_{5.6}PS_{4.4}Cl_{0.8}Br_{0.8}, manufactured by AGC Inc.) by a cutter mill was pulverized by a mortar with hands (coarse pulverization), and a sulfide solid electrolyte material having a diameter of 150 µm or less was sorted using a powder that passed through a sieve having an opening of 150 µm. D10, D50, and D90 of the sorted sulfide solid electrolyte material were measured.

Subsequently, a liquid medium for fine pulverization was prepared. The liquid medium was a mixed solvent (8 g) of 5 g of heptane (manufactured by KANTO CHEMICAL CO., INC., prime class (dehydrated-Super-) and 3 g of dibutyl ether (manufactured by Tokyo Chemical Industry Co., Ltd., stabilized with BHT). As the mixed solvent, molecular sieves 4A 1/16 (manufactured by FUJIFILM Wako Pure Chemical Corporation) was added and allowed to stand overnight or longer, and a pre-dehydrated solvent was used.

Subsequently, 8 g of the mixed solvent, 2 g of the sorted sulfide solid electrolyte material, and 40 g of high-purity alumina balls (AL9 series manufactured by AS ONE Corporation) having a diameter of 1 mm were put into a 45 mL zirconia container (manufactured by Ito Seisakusho Co., Ltd.), and the container was set in a small planetary ball mill LP-M4 manufactured by Ito Seisakusho Co., Ltd., and wet pulverization was performed at an atmosphere temperature of 15.6°C and a rotation speed of 200 rpm for 60 minutes. Thereafter, in a glove box, a stainless steel sieve (opening: 100 µm) was used to separate the slurry and the alumina balls, and the mixed solvent was poured several times onto the balls remaining on the sieve to wash away and collect the slurry adhered to ball surfaces.

Then, the slurry was allowed to stand for 3 hours to 5 hours, and the slurry from which a supernatant liquid was removed was put into a bottle, and was put into a separable flask (500 mL) inserted into a mantle heater in the glove box. Then, while flowing N₂ gas at 1.5 L/min, the slurry was heated at 150°C for 8 hours and further heated at 210°C for 3 hours to be dried.

In this way, the sulfide solid electrolyte powder of Example 1 was obtained.

### (Example 2)

The sulfide solid electrolyte material sorted in Example 1 was subjected to wet pulverization.

The wet pulverization was performed in the same manner as in Example 1 except that the pulverization time was set to 50 minutes and the atmosphere temperature was set to 19°C to obtain the sulfide solid electrolyte powder of Example 2.

### (Example 3)

A dry powder of coarse particles obtained by pulverizing sulfide solid electrolyte pellets (argyrodite crystal structure, composition: Li_{5.6}PS_{4.4}Cl_{0.8}Br_{0.8}, manufactured by AGC Inc.) of a different lot from Example 1 by a cutter mill was pulverized by a mortar with hands (coarse pulverization), and a sulfide solid electrolyte material having a diameter of 150 µm or less was sorted using a powder that passed through a sieve having an opening of 150 µm, and wet pulverization was performed.

The wet pulverization was performed in the same manner as in Example 1 except that the pulverization time was set to 30 minutes and the atmosphere temperature was set to 9.7°C to obtain the sulfide solid electrolyte powder of Example 3.

### (Example 4)

The sulfide solid electrolyte material sorted in Example 3 was subjected to wet pulverization.

The wet pulverization was performed in the same manner as in Example 3 except that the pulverization time was set to 25 minutes and the atmosphere temperature was set to 5.3°C to obtain the sulfide solid electrolyte powder of Example 4.

### (Example 5)

The sulfide solid electrolyte material sorted in Example 1 was subjected to two-stage wet pulverization.

The wet pulverization of the first stage was performed in the same manner as in Example 1 except that the diameter of the alumina balls was 2 mm, and the pulverization time was set to 20 minutes, and the atmosphere temperature was set to 8.6°C.

Thereafter, in the glove box, a stainless steel sieve (opening: 100 µm) was used to separate the slurry and the alumina balls, and a solvent was poured onto the balls remaining on the sieve in such an amount that the amount of the slurry after adding the solvent used to wash the alumina balls was 10 g, so as to wash away and collect the slurry adhered to ball surfaces. The alumina balls were collected in this way and wet pulverization of the second stage was performed. The wet pulverization of the second stage was performed in the same manner as the wet pulverization of the first stage except that 40 g of alumina balls having a diameter of 0.3 mm were charged and the pulverization time was set to 90 minutes.

Thereafter, heating and drying were performed in the same manner as in Example 1 to obtain the sulfide solid electrolyte powder of Example 5.

### (Example 6)

A dry powder of coarse particles obtained by pulverizing sulfide solid electrolyte pellets (argyrodite crystal structure, composition: Li_{5.6}PS_{4.4}Cl_{0.8}Br_{0.8}, manufactured by AGC Inc.) of a different lot from Examples 1 to 5 by a cutter mill was pulverized by a mortar with hands (coarse pulverization), and a sulfide solid electrolyte material having a diameter of 150 µm or less was sorted using powder that passed through a sieve having an opening of 150 µm, and the following two-stage wet pulverization was performed.

The wet pulverization was performed in the same manner as in Example 5 except that the atmosphere temperature in the first stage and the second stage was set to 14°C and the pulverization time in the second stage was set to 75 minutes, so as to obtain the sulfide solid electrolyte powder of Example 6.

### (Example 7)

The sulfide solid electrolyte material sorted in Example 5 was subjected to two-stage wet pulverization. The wet pulverization was performed in the same manner as in Example 5 except that the atmosphere temperature in the first stage and the second stage was set to 5.9°C and the pulverization time in the second stage was set to 60 minutes, so as to obtain the sulfide solid electrolyte powder of Example 7.

### (Example 8)

The sulfide solid electrolyte material sorted in Example 5 was subjected to two-stage wet pulverization. The wet pulverization was performed in the same manner as in Example 5 except that the atmosphere temperature in the first stage and the second stage was set to 4.4°C and the pulverization time in the second stage was set to 45 minutes, so as to obtain the sulfide solid electrolyte powder of Example 8.

### (Example 9)

The sulfide solid electrolyte material sorted in Example 5 was subjected to two-stage wet pulverization. The wet pulverization was performed in the same manner as in Example 5 except that the atmosphere temperature in the first stage and the second stage was set to 5.6°C, so as to obtain the sulfide solid electrolyte powder of Example 9.

Manufacturing conditions of the solid electrolyte powders of Examples 1 to 9 are summarized in Table 1 below.

**[Table 1]**

| | Particle diameter of material after sorting | | | Ball mill model | Pot capacity (ml) | Rotation speed (rpm) | Charged electrolyte mass (g) |
|---|---|---|---|---|---|---|---|
| | D10 (µm) | D50 (µm) | D90 (µm) | | | | |
| Example 1 | 1.93 | 8.83 | 24.59 | Planetary ball mill LP-M4 | 45 | 200 | 2 |
| Example 2 | 1.93 | 8.83 | 24.59 | Planetary ball mill LP-M4 | 45 | 200 | 2 |
| Example 3 | 2.10 | 9.46 | 37.53 | Planetary ball mill LP-M4 | 45 | 200 | 2 |
| Example 4 | 2.10 | 9.46 | 37.53 | Planetary ball mill LP-M4 | 45 | 200 | 2 |
| Example 5 | 1.93 | 8.83 | 24.59 | Planetary ball mill LP-M4 | 45 | 200 | 2 |
| Example 6 | 1.85 | 9.38 | 29.63 | Planetary ball mill LP-M4 | 45 | 200 | 2 |
| Example 7 | 1.93 | 8.83 | 24.59 | Planetary ball mill LP-M4 | 45 | 200 | 2 |
| Example 8 | 1.93 | 8.83 | 24.59 | Planetary ball mill LP-M4 | 45 | 200 | 2 |
| Example 9 | 1.93 | 8.83 | 24.59 | Planetary ball mill LP-M4 | 45 | 200 | 2 |

**[Table 1] (continued)**

| | Liquid medium | | First stage | | | Second stage | | | Atmosphere temperature (°C) |
|---|---|---|---|---|---|---|---|---|---|
| | Heptane (g) | Dibutyl ether (g) | Ball size (mm) | Ball amount (g) | Pulverization time (min) | Ball size (mm) | Ball amount (g) | Pulverization time (min) | |
| Example 1 | 5 | 3 | 1 | 40 | 60 | - | - | - | 15.6 |
| Example 2 | 5 | 3 | 1 | 40 | 50 | - | - | - | 19 |
| Example 3 | 5 | 3 | 1 | 40 | 30 | - | - | - | 9.7 |
| Example 4 | 5 | 3 | 1 | 40 | 25 | - | - | - | 5.3 |
| Example 5 | 5 | 3 | 2 | 40 | 20 | 0.3 | 40 | 90 | 8.6 |
| Example 6 | 5 | 3 | 2 | 40 | 20 | 0.3 | 40 | 75 | 14 |
| Example 7 | 5 | 3 | 2 | 40 | 20 | 0.3 | 40 | 60 | 5.9 |
| Example 8 | 5 | 3 | 2 | 40 | 20 | 0.3 | 40 | 45 | 4.4 |
| Example 9 | 5 | 3 | 2 | 40 | 20 | 0.3 | 40 | 45 | 5.6 |

### [Particle Diameter Distribution]

D10, D50, D90, and D99 in the volume-based cumulative particle diameter distribution were measured using Micrtrao MT 3300 EX II manufactured by MicrotracBEL, and an ultra small volume circulator Microtrac USVR as the laser diffraction type particle size distribution measuring device.

D10, D50, and D90 of the sulfide solid electrolyte material after sorting are shown in Table 1, and D10, D50, D90, and D99 of the sulfide solid electrolyte powders after wet pulverization are shown in Table 1.

### [Lithium Ion Conductivity]

The lithium ion conductivity of the sulfide solid electrolyte powders of Examples 1 to 9 was measured by the AC impedance method.

Specifically, in a glove box having a dew point of -50°C or lower, the sulfide solid electrolyte powder of each of Examples 1 to 9 was put into a cylinder having an inner diameter of 1 cm Φ by using a manual Newton press machine NT-50H (manufactured by KENIS LIMITED), and the pressure was applied up to 30 kN to form a powder body. Thereafter, the lithium ion conductivity was measured by applying AC impedance from an electrochemical measurement system VSP (manufactured by BioLogic) under conditions of an applied voltage of 100 mV, a measurement temperature of 25°C, and a measurement frequency range of 100 Hz to 1 MHz.

Results are shown in Table 2.

### [Collection Yield]

The collection yield was the ratio obtained by dividing a weight of the sulfide solid electrolyte powder collected by drying the slurry after pulverization by a weight (2 g) of the charged electrolyte powder of the sulfide solid electrolyte material.

Results are shown in Table 2.

**[Table 2]**

| | Particle diameter after pulverization | | | | Total pulverization time (h) | Lithium ion conductivity (mS/cm) | Collection yield (%) |
|---|---|---|---|---|---|---|---|
| | D10 (µm) | D50 (µm) | D90 (µm) | D99 (µm) | | | |
| Example 1 | 0.20 | 0.54 | 1.53 | 3.35 | 3.5 | 4.58 | 80.0 |
| Example 2 | 0.22 | 0.60 | 1.76 | 3.66 | 3.3 | 5.14 | 78.5 |
| Example 3 | 0.26 | 0.78 | 2.52 | 5.39 | 3.0 | 5.96 | 77.5 |
| Example 4 | 0.59 | 1.66 | 3.63 | 9.80 | 2.9 | 6.35 | 81.0 |
| Example 5 | 0.32 | 0.80 | 2.37 | 4.69 | 6.3 | 4.30 | 21.5 |
| Example 6 | 0.28 | 0.73 | 2.29 | 4.56 | 6.1 | 4.40 | 42.5 |
| Example 7 | 0.25 | 0.76 | 2.89 | 5.73 | 5.8 | 4.89 | 41.8 |
| Example 8 | 0.44 | 1.23 | 3.23 | 5.86 | 5.6 | 4.73 | 52.0 |
| Example 9 | 0.42 | 1.13 | 3.32 | 6.11 | 5.6 | 4.96 | 48.3 |

As shown in Table 2, as compared with the sulfide solid electrolyte powders of Examples 5 to 9 obtained by performing the pulverization in two stages, the sulfide solid electrolyte powders of Examples 1 to 4 obtained by performing the pulverization in one stage by the planetary ball mill using the pulverization balls having a diameter of 0.5 mm to 4 mm had a shorter total pulverization time, but had D99 reduced to 15 µm or less, and contained no coarse particles.

In addition, the sulfide solid electrolyte powders of Examples 1 to 4 obtained by pulverization in one stage had remarkably higher collection yield than the sulfide solid electrolyte powders of Examples 5 to 9 obtained by pulverization in two stages. The lithium ion conductivity of the sulfide solid electrolyte powders of Examples 1 to 4 was higher than that of the sulfide solid electrolyte powders of Examples 5 to 9. Note that the "total pulverization time" in Table 2 indicates a "time from the operation of putting the sulfide solid electrolyte material, the solvent, and the pulverization balls into the container to be set in the ball mill to the operation of washing and cleaning the ball mill after pulverization" (the same applies hereinafter).

### (Test Example 2)

Sulfide solid electrolyte powders of Examples 10 to 16 were produced by the following method. Examples 10 to 15 are working examples, and Example 16 is a comparative example.

### (Example 10)

First, a dry powder of coarse particles obtained by pulverizing sulfide solid electrolyte pellets (argyrodite crystal structure, composition: Li_{5.6}PS_{4.4}Cl_{0.8}Br_{0.8}, manufactured by AGC Inc.) by a cutter mill was pulverized by a mortar with hands (coarse pulverization), and a sulfide solid electrolyte material having a diameter of 150 µm or less was sorted using a powder that passed through a sieve having an opening of 150 µm. D10, D50, and D90 of the sorted sulfide solid electrolyte material were measured.

Subsequently, a liquid medium for fine pulverization was prepared. The liquid medium was a mixed solvent (100 g) of 62.5 g of heptane (manufactured by KANTO CHEMICAL CO., INC., prime class (dehydrated-Super-) and 37.5 g of dibutyl ether (manufactured by Tokyo Chemical Industry Co., Ltd., stabilized with BHT). As the mixed solvent, molecular sieves 4A 1/16 (manufactured by FUJIFELM Wako Pure Chemical Corporation) was added and allowed to stand overnight or longer, and a pre-dehydrated solvent was used.

Subsequently, 100 g of the mixed solvent, 25 g of the sorted sulfide solid electrolyte, and 400 g of high-purity alumina balls having a diameter of 1 mm (AL9 series, manufactured by AS ONE Corporation) were put into a 500 mL zirconia container (manufactured by Ito Seisakusho Co., Ltd.), and the container was set in a medium planetary ball mill LP-4 manufactured by Ito Seisakusho Co., Ltd., and wet pulverization was performed at an atmosphere temperature of 15.6°C for 60 minutes at a rotation speed of 150 rpm while cooling a pot with a spot cooler (SR-P20FLE3, manufactured by Hitachi Air Conditioning Systems Co.,Ltd.). Thereafter, collection was performed in the same manner as in Example 1.

Then, the slurry was allowed to stand for 3 hours to 5 hours, and the slurry from which a supernatant liquid was removed was put into a bottle, and was put into a separable flask (500 mL) inserted into a mantle heater in the glove box. Then, while flowing N₂ gas at 1.5 L/min, the slurry was heated at 150°C for 8 hours and further heated at 210°C for 3 hours to be dried.

In this way, the sulfide solid electrolyte powder of Example 10 was obtained.

### (Example 11)

First, a dry powder of coarse particles obtained by pulverizing sulfide solid electrolyte pellets (argyrodite crystal structure, composition: Li_{5.6}PS_{4.4}Cl_{0.8}Br_{0.8}, manufactured by AGC Inc.) of a different lot from Example 10 by a cutter mill was pulverized by a mortar with hands (coarse pulverization), and a sulfide solid electrolyte material having a diameter of 150 µm or less was sorted using a powder that passed through a sieve having an opening of 150 µm, and wet pulverization was performed.

The wet pulverization was performed in the same manner as in Example 10 except that the pulverization time was set to 50 minutes and the atmosphere temperature was set to 19°C to obtain the sulfide solid electrolyte powder of Example 11.

### (Example 12)

First, a dry powder of coarse particles obtained by pulverizing sulfide solid electrolyte pellets (argyrodite crystal structure, composition: Li_{5.6}PS_{4.4}Cl_{0.8}Br_{0.8}, manufactured by AGC Inc.) of a different lot from Example 10 by a cutter mill was pulverized by a mortar with hands (coarse pulverization), and a sulfide solid electrolyte material having a diameter of 150 µm or less was sorted using a powder that passed through a sieve having an opening of 150 µm, and wet pulverization was performed.

The wet pulverization was performed in the same manner as in Example 10 except that the pulverization time was set to 30 minutes and the atmosphere temperature was set to 9.7°C to obtain the sulfide solid electrolyte powder of Example 12.

### (Example 13)

First, a dry powder of coarse particles obtained by pulverizing sulfide solid electrolyte pellets (argyrodite crystal structure, composition: Li_{5.6}PS_{4.4}Cl_{0.8}Br_{0.8}, manufactured by AGC Inc.) of a different lot from Example 10 by a cutter mill was pulverized by a mortar with hands (coarse pulverization), and a sulfide solid electrolyte material having a diameter of 150 µm or less was sorted using a powder that passed through a sieve having an opening of 150 µm, and wet pulverization was performed.

The wet pulverization was performed in the same manner as in Example 10 except that the diameter of the alumina balls was 2 mm, and the pulverization time was set to 25 minutes, and the atmosphere temperature was set to 5.3°C, so as to obtain the sulfide solid electrolyte powder of Example 13.

### (Example 14)

The sulfide solid electrolyte material sorted in Example 13 was subjected to wet pulverization. The wet pulverization was performed in the same manner as in Example 13 except that the pulverization time was set to 20 minutes and the atmosphere temperature was set to 8.6°C to obtain the sulfide solid electrolyte powder of Example 14.

### (Example 15)

First, a dry powder of coarse particles obtained by pulverizing sulfide solid electrolyte pellets (argyrodite crystal structure, composition: Li_{5.6}PS_{4.4}Cl_{0.8}Br_{0.8}, manufactured by AGC Inc.) of a different lot from Example 10 by a cutter mill was pulverized by a mortar with hands (coarse pulverization), and a sulfide solid electrolyte material having a diameter of 150 µm or less was sorted using a powder that passed through a sieve having an opening of 150 µm, and wet pulverization was performed.

The wet pulverization was performed in the same manner as in Example 10 except that the diameter of the alumina balls was 3 mm, and the pulverization time was set to 20 minutes, and the atmosphere temperature was set to 14°C, so as to obtain the sulfide solid electrolyte powder of Example 15.

### (Example 16)

The sulfide solid electrolyte material sorted in Example 15 was subjected to wet pulverization.

The wet pulverization was performed in the same manner as in Example 15 except that the diameter of the alumina balls was 5 mm, and the atmosphere temperature was set to 5.9°C, so as to obtain the sulfide solid electrolyte powder of Example 16.

Manufacturing conditions of the sulfide solid electrolyte powders of Examples 10 to 16 described above are summarized in Table 3 below.

**[Table 3]**

| | Particle diameter of material after sorting | | | Ball mill model | Pot capacity (ml) | Rotation speed (rpm) | Charged electrolyte mass (g) |
|---|---|---|---|---|---|---|---|
| | D10 (µm) | D50 (µm) | D90 (µm) | | | | |
| Example 10 | 3.94 | 11.37 | 28.03 | Planetary ball mill LP-4 | 500 | 150 | 25 |
| Example 11 | 4.32 | 14.10 | 32.96 | Planetary ball mill LP-4 | 500 | 150 | 25 |
| Example 12 | 3.40 | 11.84 | 30.93 | Planetary ball mill LP-4 | 500 | 150 | 25 |
| Example 13 | 2.86 | 12.66 | 38.18 | Planetary ball mill LP-4 | 500 | 150 | 25 |
| Example 14 | 2.86 | 12.66 | 38.18 | Planetary ball mill LP-4 | 500 | 150 | 25 |
| Example 15 | 3.44 | 10.42 | 25.35 | Planetary ball mill LP-4 | 500 | 150 | 25 |
| Example 16 | 3.44 | 10.42 | 25.35 | Planetary ball mill LP-4 | 500 | 150 | 25 |

**[Table 3] (continued)**

| | Liquid medium | | First stage | | | Atmosphere temperature (°C) |
|---|---|---|---|---|---|---|
| | Heptane (g) | Dibutyl ether (g) | Ball size (mm) | Ball amount (g) | Pulverization time (min) | |
| Example 10 | 62.5 | 37.5 | 1 | 400 | 60 | 15.6 |
| Example 11 | 62.5 | 37.5 | 1 | 400 | 50 | 19 |
| Example 12 | 62.5 | 37.5 | 1 | 400 | 30 | 9.7 |
| Example 13 | 62.5 | 37.5 | 2 | 400 | 25 | 5.3 |
| Example 14 | 62.5 | 37.5 | 2 | 400 | 20 | 8.6 |
| Example 15 | 62.5 | 37.5 | 3 | 400 | 20 | 14 |
| Example 16 | 62.5 | 37.5 | 5 | 400 | 20 | 5.9 |

The particle diameter distribution, lithium ion conductivity, and collection yield of the sulfide solid electrolyte powders of Examples 10 to 16 were measured in the same manners as in Test Example 1. Results are shown in Tables 3 and 4.

**[Table 4]**

| | Particle diameter after pulverization | | | | Total pulverization time (h) | Lithium ion conductivity (mS/cm) | Collection yield (%) |
|---|---|---|---|---|---|---|---|
| | D10 (µm) | D50 (µm) | D90 (µm) | D99 (µm) | | | |
| Example 10 | 0.39 | 0.84 | 1.98 | 3.58 | 3.5 | 4.83 | 76.8 |
| Example 11 | 0.21 | 0.54 | 1.48 | 3.36 | 3.3 | 5.37 | 87.2 |
| Example 12 | 0.20 | 0.52 | 1.40 | 2.74 | 3.0 | 5.11 | Not measured |
| Example 13 | 0.47 | 1.15 | 2.51 | 4.23 | 2.9 | 5.19 | Not measured |
| Example 14 | 0.24 | 0.65 | 2.23 | 4.45 | 2.8 | 5.11 | Not measured |
| Example 15 | 0.34 | 1.03 | 3.35 | 6.99 | 2.8 | 4.80 | Not measured |
| Example 16 | 0.49 | 2.20 | 7.40 | 19.00 | 2.8 | 5.29 | Not measured |

As shown in Table 4, the sulfide solid electrolyte powders of Examples 10 to 15 obtained by performing the pulverization in one stage by the ball mill using the pulverization balls having a diameter of 0.5 mm to 4 mm had D99 reduced to 15 µm or less, and contained no coarse particles. The sulfide solid electrolyte powders of Examples 10 to 15 obtained by one-stage pulverization had high lithium ion conductivity and high collection yield.

On the other hand, in the sulfide solid electrolyte powder of Example 16 obtained by performing pulverization in one stage by a ball mill using pulverization balls having a diameter of 5 mm, D99 exceeded 15 µm, and coarse particles remained.

Although various embodiments have been described above with reference to the drawings, it is needless to say that the present invention is not limited to such examples. It is apparent to those skilled in the art that various changes and modifications can be conceived within the scope of the claims, and it is also understood that such changes and modifications belong to the technical scope of the present invention. The components described in the above embodiments may be combined in any manner without departing from the spirit of the invention.

The present application is based on Japanese Patent Application No. 2021-161463 filed on September 30, 2021, contents of which are incorporated herein by reference.

## Claims

1. A method for manufacturing a sulfide solid electrolyte powder, the method comprising:
preparing a slurry containing a sulfide solid electrolyte material and a liquid medium; and
pulverizing the sulfide solid electrolyte material in the slurry in one stage by a ball mill using a pulverization ball having a diameter of 0.5 mm to 4 mm to obtain a sulfide solid electrolyte powder having a particle diameter D99 of 15 µm or less.

2. The method according to claim 1, wherein
the sulfide solid electrolyte powder obtained after the pulverization has a particle diameter D50 of 1.5 µm or less.

3. The method according to claim 1, wherein
the sulfide solid electrolyte powder obtained after the pulverization has a particle diameter D50 of 0.4 µm to 0.9 µm.

4. The method according to any one of claims 1 to 3, wherein
the slurry has a solid content concentration of 5 mass% to 40 mass%.

5. The method according to any one of claims 1 to 4, wherein
a time of the pulverization is 120 minutes or less.

6. The method according to any one of claims 1 to 5, wherein
the pulverization ball is an alumina ball.

7. The method according to any one of claims 1 to 6, wherein
the sulfide solid electrolyte material before the pulverization has a particle diameter Dₘₐₓ of 200 µm or less.

8. The method according to any one of claims 1 to 7, wherein
the pulverization ball has a diameter of 1 mm to 4 mm.

9. The method according to any one of claims 1 to 8, wherein
the sulfide solid electrolyte powder comprises Li, P, and S.

10. The method according to any one of claims 1 to 9, wherein
the sulfide solid electrolyte powder has a crystal structure of an argyrodite type.
